Europäisches Patentamt

European Patent Office

Office européen des brevets

(11) Publication number: **0 260 146**
**A2**

# (12) EUROPEAN PATENT APPLICATION

(21) Application number: **87308032.9**

(51) Int. Cl.⁴: **H 04 N 3/12**

(22) Date of filing: **11.09.87**

(30) Priority: **12.09.86 JP 214225/86**

(43) Date of publication of application:
**16.03.88 Bulletin 88/11**

(84) Designated Contracting States:
**CH DE ES FR GB IT LI NL SE**

(71) Applicant: **International Business Machines Corporation**
**Old Orchard Road**
**Armonk, N.Y. 10504 (US)**

(72) Inventor: **Matino, Haruhiro**
**3-25-12, Takaidohigashi Suginami-ku**
**Tokyo (JP)**

(74) Representative: **Appleton, John Edward**
**IBM United Kingdom Limited Intellectual Property**
**Department Hursley Park**
**Winchester Hampshire SO21 2JN (GB)**

(54) **Multi-colour display system.**

(57) A multi-colour display system for driving a colour display device wherein filters for colours R, G, and B are provided at intersections of X and Y electrodes placed in matrices, said system characterized in that the development of intermediate colours is digitally controlled by receiving data of one of at least three levels of intensities for each of said intersections and reducing the number of intersection driving signals to be supplied repeatedly in one frame when said intensity to be displayed has a lower level, compared with the number of intersection driving signals to be supplied repeatedly when said intensity to be displayed has a higher level, thereby to change colour mixing ratios.

EP 0 260 146 A2

## Description

## MULTI-COLOUR DISPLAY SYSTEM

The present invention relates to multi-colour display and, more particularly, to a system for obtaining gray-scale or multi-colour display substantially without changing the digital (binary ON and OFF) characteristics of a conventional display panel and a conventional driving circuit.

There is a high possibility that cathode ray tubes (CRT) would be replaced by liquid crystal display (LCD) devices which have the advantages of lower power consumption and thinner structures.

However, unlike a CRT, an LCD device, having a lower response speed in the order of several microseconds to several tens of microseconds, generally employs the line-at-a-time driving scheme rather than the point-at-a-time driving scheme.

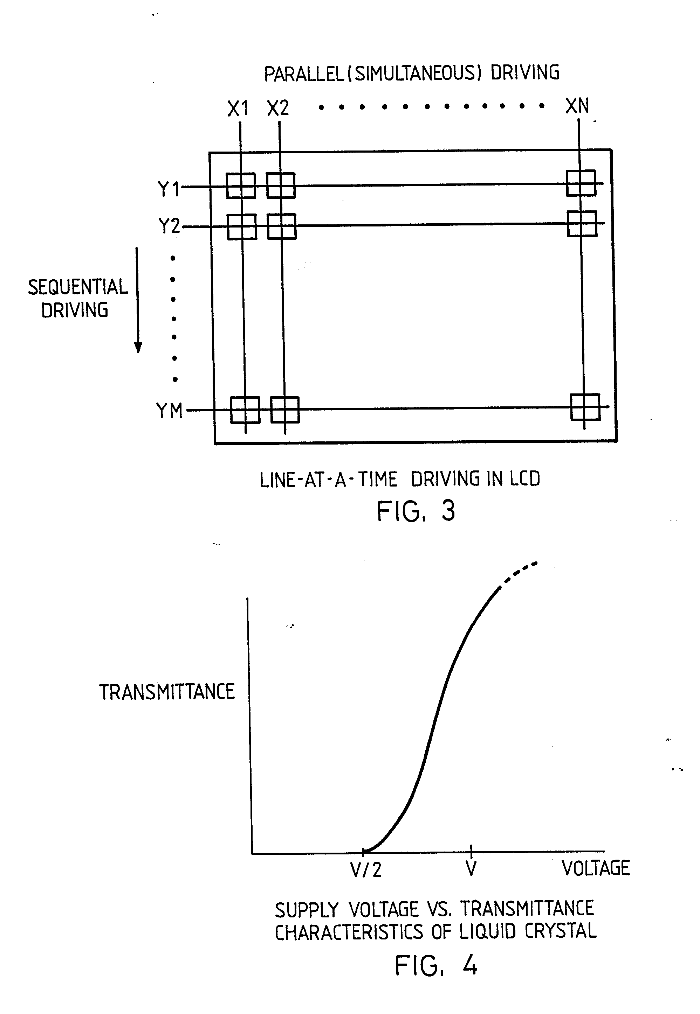

As illustrated in Fig. 3, in the line-at-a-time driving scheme, a signal is supplied to an electrode Y1 in the electrodes placed in an X -Y matrix and, at the same time, signals are parallely supplied to electrodes X1 through XN from the respective drivers, so that intersections X1 - Y1 through XN - Y1 are displayed. Next, signals are supplied to intersections of an electrode Y2 and the electrodes X1 through XN. When an electrode YM has been processed, the process is returned back to the electrode Y1 to begin the scanning of the next frame.

A liquid crystal changes its transmittance depending upon the existence or absence of a voltage, and it is desirable that a liquid crystal changes its transmittance sharply when a voltage greater than a threshold (e.g., over V/2) is applied thereto (See Fig. 4). The reason therefor is that the moment the voltage V/2 has been applied to the electrode X1, for example, while the voltage V/2 was being applied only to the electrode Y1 but not to the electrodes Y2 through YM, intersections such as X1 - Y2, X1 - Y3, . . . , X1 - YM and X2 - Y1, X3 - Y1, . . . , XN - Y1, etc., respectively enter into the so-called half-selected condition where the voltage V/2 is applied.

Actually, however, it is quite difficult to obtain a liquid crystal having such sharply rising characteristics as shown in Fig. 4. Therefore, with the so-called simple matrix system wherein X - Y electrodes are crossed only, the contrast would be reduced. Such a reduction in the contrast could be avoided with the so-called active matrix system wherein a switching transistor (e.g., a TFT, namely a thin film transistor) is incorporated serially with a liquid crystal at each of intersections of X - Y electrodes.

In colour display with an LCD device, colours are developed by providing filters for colours R, G, and B at pel portions corresponding to the three primary colours and supplying the ON and OFF signals to the LCD device. Accordingly, the number of colours which can be developed only by supplying ON and OFF signals to the LCD device is $2^3 - 1 = 7$ (eight colours including black).

If the LCD device can be controlled not only with the ON and OFF signals but also with signals for intermediate levels of intensities (gray-scale), it would be possible to obtain multi-colour display (more than seven colours excluding black are herein called multiple colours). For example, if it is assumed that each of the three primary colours has four levels of intensities, it would be possible to display $4^3 - 1 = 63$ colours. However, it has been difficult to remove a high technical barrier between the display with seven colours and that with multiple colours.

Namely, in case of the display with seven colours, which is digitally controlled only with the ON and OFF signals, the allowance for variances in the characteristics of the respective elements is relatively large. Therefore, it has been possible to manufacture industrially LSI devices, each consisting of more than one million elements.

On the other hand, in case of the display with multiple colours, which is analoguely controlled not only with the ON and OFF signals but also with signals of intermediate levels between them, a highly precise control would be required, even in case of only four levels, for example, to supply precisely the respective levels of 100% (ON), 66%, 33%, and 0% (OFF). This would largely increase the difficulties in the LSI technology, and naturally the cost. Further, as shown in Fig. 4, a liquid crystal should have sharply rising characteristics in order to obtain a high contrast, but should not have such characteristics for analogue display which requires gradually rising characteristics, thereby causing conflicts in the requirements for the liquid crystal.

In order to solve the above problem, it may be considered to incorporate TFT's stated above. However, in that case, the characteristics of such TFT's would be required to have analogue characteristics and fall within the tolerances. In case of a large display panel which would include more than one million TFT's, it would be quite difficult in the manufacturing techniques to keep the analogue and linear characteristics of all the elements to their respective tolerances within the operating temperature range. This would significantly reduce the yield of the panel.

Furthermore, since analogue values would be used in the driving circuit, the power consumption would be increased so high that the advantage of the low power consumption could hardly be maintained. This would result in restricting the integration density of the driving circuit and, accordingly, increasing the cost.

In effect, any prior attempt to provide an LCD panel having the capability of displaying multiple colours has encountered various technical and economic barriers.

As is apparent from the above description, the problem in the prior techniques for providing an LCD panel having the capability of displaying multiple colours consists in that they tried to provide the panel itself with the analoguely displaying capability.

As a consequence of the foregoing difficulties in the prior art, the present invention has enabled to display gray-scale or multiple colours without changing at all the digital characteristics of the conventional panel itself. In the field of data processing, almost all of data to be displayed with a display device are static images, unlike moving images in case of a television. Even in case of moving images, they would be moved as slowly as one could recognize them. In other words, when they are moved at a high speed, the colour displaying capability itself may not be needed. Therefore, the above problem need be solved only in case they are moved at a low speed.

Display is generally made at a cycle in the order of 40 to 60 frames per second. This means that, at each of the intersections being displayed in a static image portion of a picture or characters, the same displays are repeated at a cycle of 40 to 60 frames per second (40 to 60Hz). Therefore, it is aimed in the present invention to provide intermediate levels of intensities by thinning out the repetition cycles properly.

According to the invention there is provided a multi-colour display system, for driving a colour display device wherein colour filters for the three primary colours are provided at each of pel positions placed in a matrix, said system characterised in that intermediate colours are developed under digital control by receiving data of one of at least three levels of intensities for each of said colours at each of said pel positions and reducing the number of driving signals to be supplied repeatedly when said intensity to be displayed has a lower level, compared with the number of driving signals to be supplied repeatedly when said intensity to be displayed has a higher level, thereby to control colour mixing ratios.

In order that the invention may be fully understood it will now be described by way of example with reference to the accompany drawings, in which:-

Figure 1 is a block diagram of an embodiment of the present invention.

Figures 2A through 2C are diagrams showing the relationship between the repetition cycles and the development of colours.

Figure 3 is a schematic diagram illustrating the line-at-a-time driving scheme in an LCD device.

Figure 4 is a graph showing the supply voltage versus transmittance characteristics of a liquid crystal.

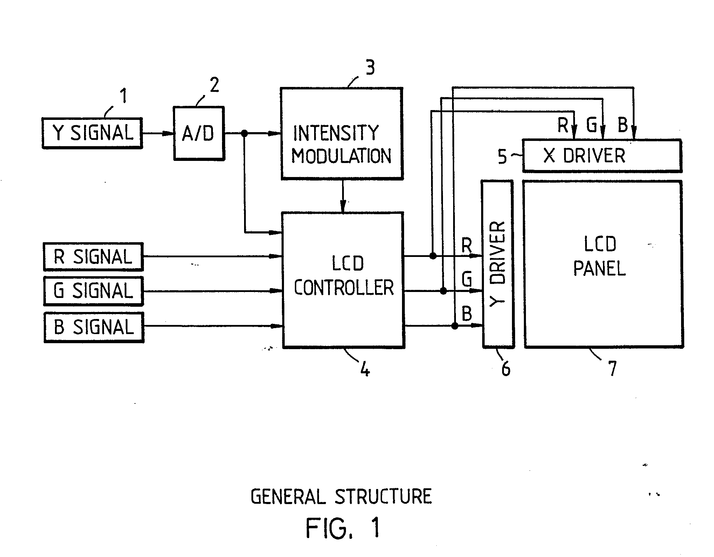

Fig. 1 is a block diagram illustrating the general structure of a liquid crystal display (LCD) device in which the present invention is employed. A Y signal 1 is intensity data which is generally obtained as a video signal (in the point-at-a-time driving scheme). When a CRT is employed, the signal is supplied directly to cathodes for R, G, and B through a video amplifier (analogue driving). In the embodiment of an LCD device illustrated in Fig. 1, the Y signal 1 is supplied to an intensity modulation controller 3 through an A-D converter 2 in order to obtain gray-scale or multi-colour display.

The intensity modulation controller 3 supplies, to an LCD controller 4, a signal which changes the repetition cycle according to the intensity for each intersection to be displayed (e.g., in the range of 50Hz - 0Hz in case of 50 frames per second). For example, when it is desired to display with five levels of intensities at the cycle of 50 frames per second, the repetition cycles of 50Hz, 37.5Hz, 25Hz, 12.5Hz, and 0Hz are designated according to the ratios of the intensities of 100% (ON), 75%, 50%, 25%, and 0% (OFF).

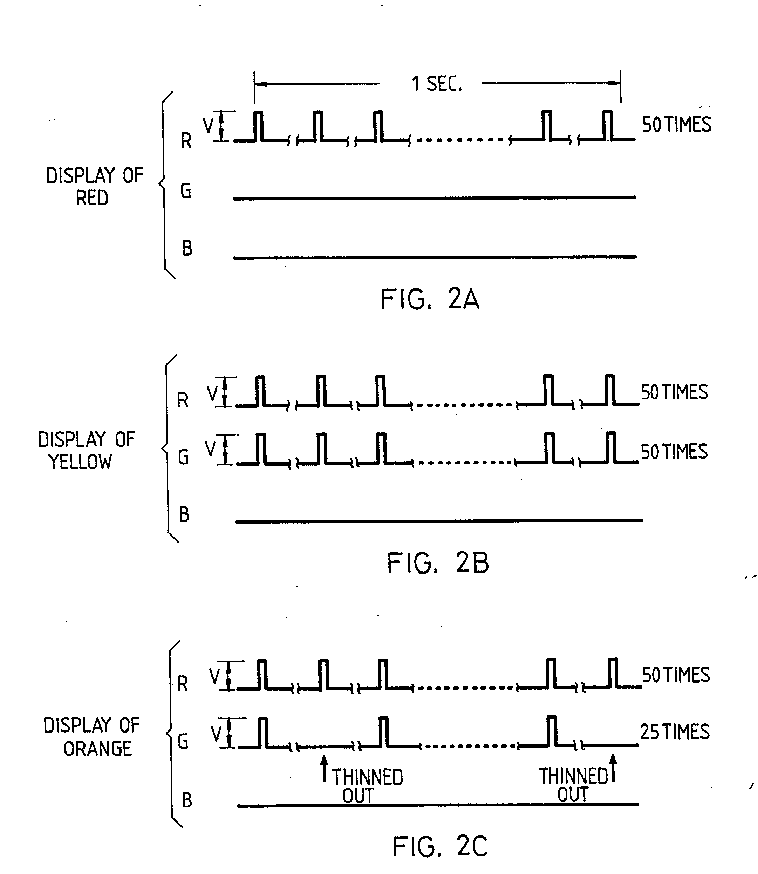

The relationship between the repetition cycles and the development of colours will be explained below with reference to a specific example employing the cycle of 50 frames per second. When a voltage V, which is the total of an X voltage of V/2 and a Y voltage of V/2, is supplied to an intersection of X and Y electrodes with a filter for R repeatedly at the cycle of 50 times per second, red is displayed, as shown in Fig. 2A. (Hereinafter, the supply voltage is represented as the total voltage V which is supplied to an intersection of X and Y electrodes.) When the voltage V is supplied to each of an intersection with a filter for R and an adjacent intersection with a filter for G with the intensity of 100% (i.e.,50 times per second), respectively, yellow is displayed with red and green mixed with each other, as shown In Fig. 2B. Further, when the voltage V is supplied to an intersection with a filter for R with the intensity maintained to 100% (i.e., 50 times per second) and also to an intersection with a filter for G with the intensity thinned out to 50% (i.e., 25 times per second), orange is developed with the mixed colour approaching from yellow toward red, as shown in Fig. 2C. On the contrary, when the voltage V is supplied to an intersection with a filter for G with the intensity maintained to 100% (i.e., 50 times per second) and also to an intersection with a filter for R with the intensity thinned out to 50% (i.e., 25 times per second), yellowish green is developed with the mixed colour approaching from yellow toward green. Thus, even when an intensity is reduced only to a half, for example, the number of combinations of colours to be obtained is $4^3 = 64$ including black. Since the development of all these colours can be digitally controlled (with binary signals), it is possible to realize the present invention without changing at all the binary characteristics of the conventional LCD panel and driving IC.

The LCD controller 4 has a function of supplying, to an X driver 5 and a Y driver 6, a signal which changes a point-at-a-time signal to a line-at-a-time signal and represents where a colour to be presently displayed has been designated in the display screen, and a signal which controls the number of repetition cycles to obtain the display of a desired colour.

As is clear from the above explanation, by providing the intensity modulation controller 3, it has become possible to display much more intermediate colours than the seven colours (eight colours including black) which could be displayed heretofore only with the binary ON and OFF signals for each of R, G, and B. Since only one intensity modulation controller 3 is required to be provided in the entire system, it does not add to the cost significantly.

Besides the above-stated thinning-out method, it is also possible to employ a time modulating method wherein pulse widths are reduced. However, in order to execute the time modulation method with the line-at-a-time scheme, it would be necessary to supply signals of different pulse widths according to intensities, simultaneously (parallely) to X1 through XN. Further, the number of N in one frame generally amounts to 700 to 1,000 in a data display system and, in case of a colour display system, three times of the number. Therefore, if each of the electrodes is provided with a signal processing circuit, a large amount of signal processing circuits would be needed, thereby requiring too much cost.

Fears might be felt that flickering would be increased by employing the thinning-out method to reduce the repetition cycles according to the present invention. However, in the portions of high intensities, flickering is low since the repetition cycles are high, while in the portions of low intensities, flickering is not so remarkable because of its less brightness even if the flickering is increased to some extent. Accordingly, there exists no substantial problem of flickering.

While the present invention has been explained with reference to the embodiment wherein a liquid crystal is employed, the present invention can also be applied to display devices of the matrix system, such as electroluminescence (EL), gas panels, etc.

The present invention has enabled gray-scale or multi-colour display without changing at all the digital characteristics of a conventional panel itself and conventional X and Y drivers. It does not add to the cost significantly. Accordingly, a multi-colour display device with a high performance/cost ratio, low power consumption, and a thinner structure has been realized.

## Claims

1. A multi-colour display system, for driving a colour display device wherein colour filters for the three primary colours are provided at each of pel positions placed in a matrix, said system characterised in that intermediate colours are developed under digital control by receiving data of one of at least three levels of intensities for each of said colours at each of said pel positions and reducing the number of driving signals to be supplied repeatedly when said intensity to be displayed has a lower level, compared with the number of driving signals to be supplied repeatedly when said intensity to be displayed has a higher level, thereby to control colour mixing ratios.

2. A multi-colour display system for driving a colour display device wherein filters for colours R, G, and B are provided at intersections of X and Y electrodes placed in matrices, said system characterized in that the development of intermediate colours is digitally controlled by receiving data of one of at least three levels of intensities for each of said intersections and reducing the number of intersection driving signals to be supplied repeatedly in one frame when said intensity to be displayed has a lower level, compared with the number of intersection driving signals to be supplied repeatedly when said intensity to be displayed has a higher level, thereby to change colour mixing ratios.

0260146

GENERAL STRUCTURE

FIG. 1

0260146

FIG. 2A

FIG. 2B

FIG. 2C

0260146

PARALLEL (SIMULTANEOUS) DRIVING

LINE-AT-A-TIME DRIVING IN LCD

FIG. 3

SUPPLY VOLTAGE VS. TRANSMITTANCE
CHARACTERISTICS OF LIQUID CRYSTAL

FIG. 4